# EUROPEAN PATENT APPLICATION

(11) **EP 0 883 287 A1**
(43) Date of publication of application: **09.12.1998**
(21) Application number: 97108767.1
(22) Date of filing: 02.06.1997
(51) Int. Cl.: H04N 1/387, H04N 1/38

(54) **Image processing system with automatic image separation and alignment functions**

(71) Applicant: Primax Electronics Ltd, Hsi Chih Town, Taipei Hsien (TW)
(72) Inventor: Wieringa, Fred, c/o Primax Electronics Ltd., Hsi Chih Town, Taipei Hsien (TW)
(74) Representative: Bauer, Robert, Dipl.-Ing.

(57) **Abstract**

An image processing system (10) is used to automatically separate multiple document images (62,63,64) contained in a master image file (44,60) into correspondent document image files (46) and also align each rectangular document image (62,63). The image processing system (10) comprises a scanner (14) for scanning one or more documents (22) and a computer (12) which comprises a scanner control program (40) for controlling operations of the scanner (14) and saving the image signals generated by the scanner (14) in a master image file (44,60), and an image processing program (42) for detecting each document image (62,63,64) contained in the master image file (44,60) and generating a correspondent document image file (46) for each detected document image (62,63,64). The image processing program (42) further detects each document image (62,63,64) to determine if it is a rectangular image and aligns each rectangular document image (62,63) contained in the correspondent document image file (46) to an upright position.

## Description

The present invention relates to an image processing system, and more particularity, to an image processing system with automatic image separation and alignment functions.

Window-based image processing systems for scanning documents to generate image files and performing some image processing functions over those image files are commonly seen in the computer market. Documents such as photographs are usually separately placed above a transparent platform of a scanner and then scanned into a computer to generate a master image file. In order to use the photograph images contained in the master image file, such as integrating one photograph image into a graphic file which contains a greeting card image, a user has to use an image processing software to separate the photograph image from the master image file first and then perform some image processing functions such as aligning the photograph image to an upright position if the photograph image is in a tilted position, or cropping the white border away from the photograph image, etc..

Such operation is quite time consuming and tedious especially when many photographs or documents need to be scanned and processed. Many users simply do not know how to use image processing software to separate a document image from a master file or to align a photograph image to an upright position. Even for professional users such operations are very tedious and time consuming what may significantly drop the efficiency in processing a big amount of documents.

With these problems in mind, the present invention aims at providing an image processing system which can automatically separate individual document images from a master image file and also align those separated document images to solve the above mentioned problems.

This is achieved by the present invention as claimed in that the image processing system provides an image processing program which can detect each document image contained in a master image file and generate a correspondent document image file for each detected document image. The image processing program further detects the shape of each document image to see if it is a rectangular image and aligns each rectangular document image contained in the correspondent document image file to an upright position.

Further improvements in this respect are obtained by the features specified in the dependent claims.

The invention is illustrated by way of example with reference to the accompanying drawings, in which
Fig.1 is a perspective view of an image processing system according to the present invention,
Fig.2 is a function block diagram of the image processing system shown in Fig.1,
Fig.3 is a diagrammatic view of the content of an master image file, and
Fig.4 shows a process of the image processing program according to the present invention.

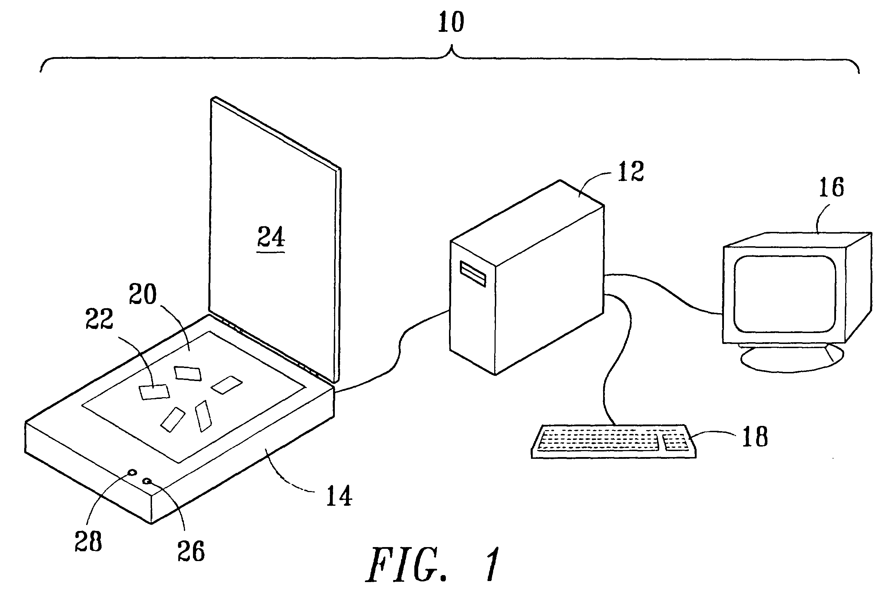

Fig.1 is a perspective view of an image processing system 10 for scanning documents to generate image files and performing some image processing functions over the image files according to the present invention. The image processing system 10 comprises a computer 12, a scanner 14, a monitor 16 and a keyboard 18.

The scanner 14 comprises a transparent platform 20 for placing one or more documents 22 to be scanned, a lid 24 pivotally installed on top of the platform 20 for covering the documents 22 when scanning, a START button 26 for initiating the scanner 14 to scan the documents 22 placed on the transparent platform 20, and an AUTO button 28 for delivering an auto signal to the computer 12. The AUTO button 28 is a bi-level switch which can be maintained in an ON or OFF status. For initiating the image processing functions provided by the present invention, the AUTO button should be maintained in an ON position. The scanner 14 scans all the documents 22 at one time and generates a plurality of correspondent image signals. These image signals coupled with the auto ON signal generated by the AUTO button 28 are transmitted to the computer 12 for further processing.

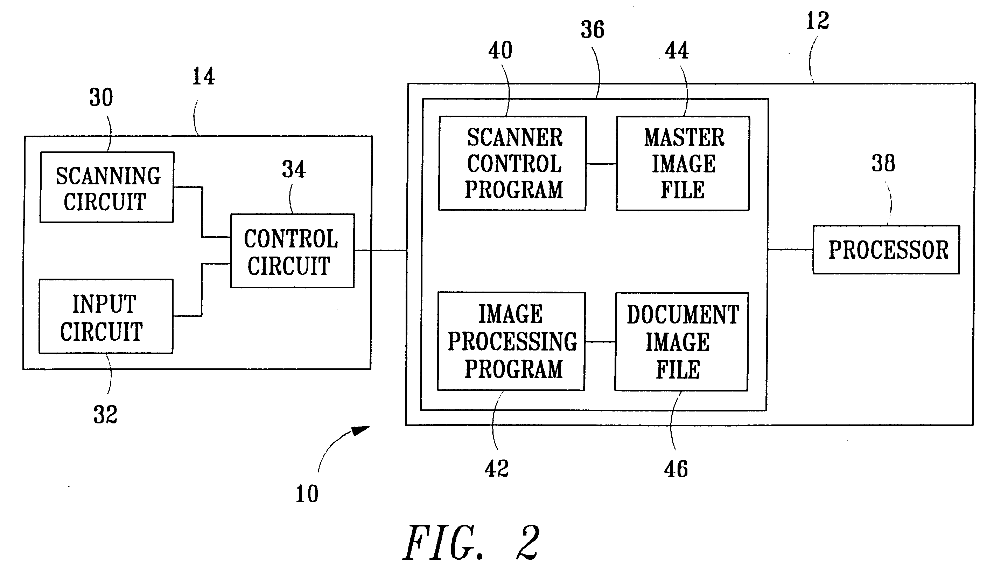

Fig.2 is a function block diagram of the image processing system 10 shown in Fig.1. The system 10 comprises a scanner 14 and a computer 12. The scanner 14 comprises a scanning circuit 30 for scanning the documents 22 placed on the platform 20 of the scanner 14 and generating a plurality of correspondent image signals which contain one document image for each scanned document 22, an input circuit 32 which is connected to the START button 26 and AUTO button 28 for generating corresponding signals for each button, and a control circuit 34 for controlling the scanning circuit 30 and the input circuit 32 and also for transmitting the signals generated by the two circuits 30 and 32 to the computer 12.

The computer comprises a memory 36 for storing programs and data and a processor 38 for executing the programs stored in the memory 36. Two programs 40 and 42 are stored in the memory 36. The scanner control program 40 is used for controlling operations of the scanner 14 and saving the image signals generated by the scanner 14 in a master image file 44. The image processing program 46 is used for performing many image processing functions such as detecting each document image contained in the master image file 44 and generating a correspondent document image file 46 for each detected document image.

The image processing program 42 is initiated by the scanner control program 40 when the scanner control program receives an auto ON signal generated by the AUTO button 28. Since most documents are in rectangular shape, the image processing program 42 can further align the document image of each document 22 to an upright position before or after generating the document image file 46. White borders are usually presented around photographs or printed documents, the image processing program 42 can also detect a white border along each side of a document image and crop each detected white border out of the document image before or after generating the document image file 46.

The master image file 44 contains a plurality of image lines which contain the document images of all the documents 22. Each image line contains a predetermined number of image data (pixels) which are generated by the scanner 14. Each image line may contain portion of one document image which is called an image segment. And the rest of the image data contained in the image line belong to the background image. Threshold for judging whether an image datum belongs to an image segment or to the background image may be obtained by analyzing the image data contained in the boundary portion of the master image file 44. Once the threshold is obtained, image segment(s) contained in each image line can be individually identified.

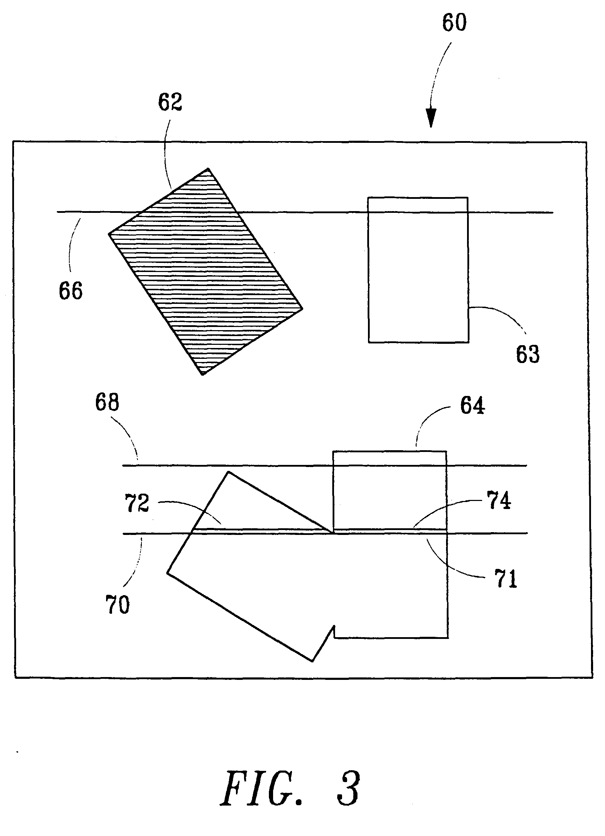

Please refer to Fig.3. Fig.3 is a diagrammatic view of the content of a master image file 60. The master image file 60 contains two rectangular document images 62 and 63, and one overlapped document image 64 which is formed by two overlapped documents placed on the platform 20 of the scanner 14. The rest of the master image file 60 is the background image 66.

The master image file 60 contains a plurality of sequentially arranged horizontal image lines (not shown) and each image line contains a predetermined number of pixels (image data). Each document image is formed by a plurality of image segments such as the horizontal lines shown in the document image 62. All the image segments of one document image are vertically stacked together.

Each image line of the master image file 60 may contain one or more image segments. If more than one image segment are covered such as the image line 66, this usually means more than one document image are covered in the image line if no document images covered by this image line are overlapped. But it is also possible that two image segments contained in one image line, such as the image line 68, belong to the same document image. In this case, the document image must be an overlapped document image such as the document image 64.

Each overlapped document image formed by two or more overlapped documents is taken by the image processing program 42 as one document image. And the image lines covered by such document image may contain two or more image segments which belong to the same document image.

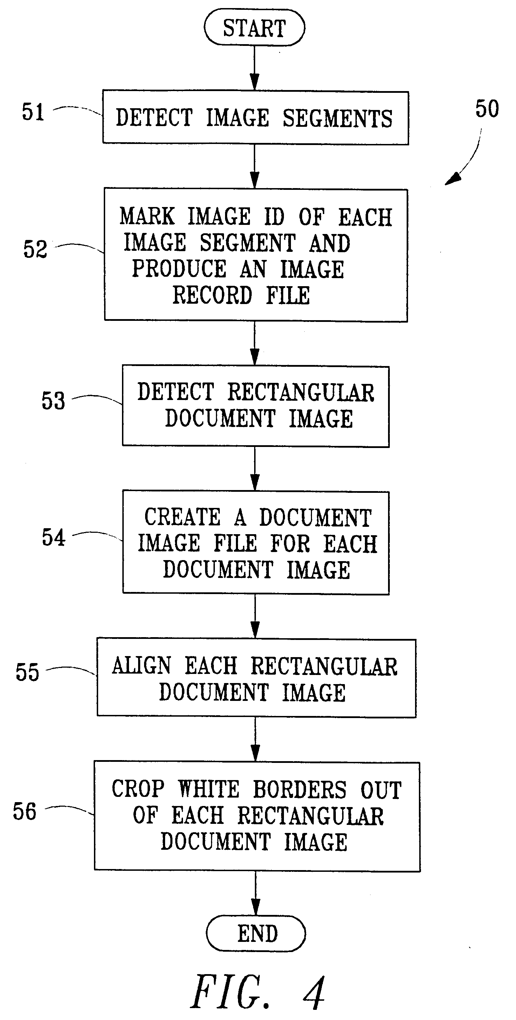

Please refer to Fig.4. Fig.4 shows a process 50 of the image processing program 42 according to the present invention. The process 50 illustrates how the image processing program 42 generates a document image file 46 for each document image contained in the master image file 60, and also how to align a rectangular document image and crop the white border out of a document image file 46. The process 50 comprises the following steps:
- step 51: detect all the image segments contained in the master image file 60, generate an image segment record for each detected image segment and store all the image segment records in an index file;
- step 52: mark each image segment as an image segment of a specific document image by analyzing the segment location of each image segment recorded in the index file, and record each detected document image in an image record file which contains a document image record for each document image;
- step 53: analyze the shape of each detected document image by using the index file to determine if it is a rectangular image and also to determine its rotation angle if it is a rectangular image, and record the analysis result of each document image in the image record file;
- step 54: copy each document image contained in the master image file 60 to a document image file 46 by using the index file;
- step 55: align each rectangular document image contained in a correspondent document image file 46 to an upright position by rotating the locations of all the image data contained in the document image file 46 for the rotation angle recorded in the image record file;
- step 56: detect a white border along each side of each rectangular document image and crop each detected white border out of the correspondent document image file 46.

In step 51, the image processing program 42 detects the image segments contained in each image line of the master image file 44 and generates an image segment record for each image segment and stores the image segment records in an index file. The format of each image segment record is listed below:
(image ID) (x,y) (cnt)

The image ID parameter is used for recording a specific document image to which the image segment belongs to. This parameter is temporarily left blank at this step and will be marked in step 52. The x and y parameters represent the image line number and pixel number of the first pixel of each image segment contained in the master image file 44. The cnt parameter represents the number of pixels contained in each image segment. All the image segment records stored in the index file are generated in a line by line, segment by segment sequence.

In step 52, the image processing program 42 will mark the image ID parameter of each image segment record and also produce an image record file. The image record file contains one document image record for each detected document image. Its format is listed below:
(image ID) (rectangular / not rectangular) (rotation angle)

For each newly detected document image, an image ID will be assigned and a new document image record will be created in the image record file. The rectangular/not rectangular parameter will record whether this document image is rectangular. If a document image is rectangular, its rotation angle will be recorded in the rotation angle parameter.

For the first image line which contains one or more image segments, the image segment record of each image segment of the first image line is marked with a new image ID and a new document image record is also created in the image record file for each new image ID in the same time. After the image segment record(s) of the image segment(s) contained in the first image line are marked, all the following image segment records contained in the index file will be analyzed and marked one by one. If the segment location of a target image segment is overlapped with the segment location of another image segment located in the previous image line, these two image segments will be marked with the same image ID. If there is no overlap or there is no image segment contained in the previous image line, the target image segment will be marked with a new image ID and a new document image record will be created in the image record file.

A special condition may occur over which the segment location of one target image segment may be overlapped with the segment locations of two or more image segments contained in the previous image line. One example is shown in the image line 70 of Fig.3. The image line 70 contains only one image segment 71 of the overlapped document image 64 but there are two image segments 72 and 74 contained in the previous image line overlapped with the image segment 71. According to the above described rule, segments 72 and 74 are already marked with two different image IDs before marking the segment 71. But since both of them are overlapped with the segment 71, that means all three image segments 71, 72 and 74 should be marked with the same image ID because they all belong to the document image 64. In this case the image processing program 42 will replace the image IDs of the segment 74 and all the segments overlapped above it with the image ID of the segment 72. In the same time, the document image record recorded in the image record file for the image ID of the segment 74 will be erased by the image processing program 42. And the document image record of the document image 64 will be marked "not rectangular" since it is not possible for such an overlapped document image to be rectangular.

In step 53, the shape of each document image recorded in the image record file which has not been marked "not rectangular", is analyzed to determine if the document image is a rectangular image and also to determine its rotation angle if it is a rectangular image. The analysis result of each document image is recorded in the correspondent document image record of the image record file. In determining the shape of each document image, the image segment records of each document image contained in the index file will be used.

Many methods can be used to determine whether a document image is in a rectangular shape. In general, the first pixels of all the image segment records of one document image can be used to analyze whether one or two straight edges of the document image exist. And the last pixels of the document image can be used to analyze whether another one or two straight edges exist. If it is not possible to obtain at least one straight edge from all the first pixels or from the last pixels of the document image, it is obvious that this document image is not rectangular. After the straight edges of the document image are obtained, they can be compared to see if one straight edge is approximately parallel or orthogonal to all the other edges. After a document image is determined to be a rectangular image, a rotation angle which can be used to rotate the document image to an upright position such as the position of the document image 63 shown in Fig.3, can also be obtained. And the image processing program 42 will mark the document image record of the document image contained in the image record file as "rectangular" and also put the rotation angle into it.

The major purpose for determining whether a document image is rectangular is to decide whether the document image should be rotated to an upright position or not. If the shape of a document image is not rectangular, rotating it doesn't make too much sense. Rotating a rectangular document image to an upright position is very useful in processing document images since most documents are in rectangular shape. It is not easy to align each document to be scanned to an upright position over the platform 20 of the scanner 14. Having the image processing program 42 automatically identify and rotate each document image to an upright position will save end users a lot of time and efforts.

In step 54, each document image contained in the master image file 44 will be copied to a newly created document image file 46 by using the index file. Since each image segment record is marked with an image ID, all the image segments of the same image ID contained in the master image file 44 can be easily identified and copied to the correspondent document image file 46.

In step 55, the rotation angles recorded in the document image record of the image record file are used to rotate all the rectangular document images contained in the document image files 46 one by one.

In step 56, after each rectangular document is rotated to an upright position, the image processing program 42 can detect a white border along each side of a rectangular document image and crop each detected white border out of the document image file 46. Now each of the document image files 46 is ready to be transferred to other image processing programs initiated by an end user for further processing.

Process 50 contains three image processing functions: document separation, document alignment and white border cropping functions. The document separation and document alignment functions can be used separately. For example, when scanning a single page rectangular document, only the document alignment function will be used to rotate the rectangular document image to an upright angle.

## Claims

1. An image processing system (10) comprising:
a. a scanner (14) for scanning one or more documents (22) at a time and generating correspondent image signals which contain one document image (62,63,64) for each scanned document (22); and
b. a computer (12) connected to the scanner (14) comprising:
a) a memory (36) for storing programs (40,42) and data (44,46),
b) a processor (38) for executing the programs (40,42) stored in the memory (36), and
c) a scanner control program (40) stored in the memory (36) for controlling operations of the scanner (14) and saving the image signals generated by the scanner (14) in a master image file (44,60);
**characterized in that:**
the image processing system (10) further comprises an image processing program (42) stored in the memory (36) for detecting each document image (62,63,64) contained in the master image file (44,60) and generating a correspondent document image file (46) for each detected document image (62,63,64).

2. The image processing system (10) of claim 1 wherein the scanner (14) further comprises an auto button (28) for generating an auto signal and wherein, upon receiving the auto signal, the scanner control program (40) initiates the image processing program (42) to generate the document image file (46) for each detected document image (62,63,64).

3. The image processing system (10) of claim 1 wherein the image processing program (42) further detects the shape of each document image (62,63,64) to see if it is a rectangular image and aligns each rectangular document image (62,63) contained in the correspondent document image file (46) to an upright position.

4. The image processing system (10) of claim 3 wherein the image processing program (42) further detects a white border along each side of each rectangular document and crops each detected white border out of each rectangular document image (62,63) contained in the correspondent document image file.

5. An image processing system (10) comprising:
a. a scanner (14) for scanning a document (22) and generating correspondent image signals which contain one rectangular document image (62,63) of the scanned document; and
b. a computer (12) connected to the scanner (14) comprising:
a) a memory (36) for storing programs (40,42) and data (44,46),
b) a processor (38) for executing the programs (40,42) stored in the memory (36), and
c) a scanner control program (40) stored in the memory (36) for controlling operations of the scanner (14) and saving the image signals generated by the scanner (14) in a master image file (44,60);
**characterized in that:**
the image processing system (10) further comprises an image processing program (42) stored in the memory (36) for detecting the shape of the document image (62,63,64) to see if it is a rectangular image and aligning the detected rectangular document image (62,63) to an upright position.

6. The image processing system (10) of claim 5 wherein the image processing program (42) further generates a document image file (46) for the aligned document image (62,63).

7. The image processing system (10) of claim 6 wherein the image processing program (42) further detects a white border along each side of the rectangular document image (62,63) and crops each detected white border out of the document image file.

8. The image processing system (10) of claim 5 wherein the scanner (14) further comprises an auto button (28) for generating an auto signal and wherein, upon receiving the auto signal, the scanner control program (40) initiates the image processing program (42) to detect and align the document image (62,63).
